Europäisches Patentamt

European Patent Office

Office européen des brevets

(11) Publication number: **0 057 095**

**B1**

(12) **EUROPEAN PATENT SPECIFICATION**

(45) Date of publication of patent specification: **25.05.88**

(21) Application number: **82300334.8**

(22) Date of filing: **22.01.82**

(51) Int. Cl.⁴: **B 05 D 5/00,** F 28 F 19/02, F 28 D 21/00

(54) **Protection of parts exposed to flue gas.**

(30) Priority: **22.01.81 GB 8101875**
**27.08.81 GB 8126219**

(43) Date of publication of application:
**04.08.82 Bulletin 82/31**

(45) Publication of the grant of the patent:
**25.05.88 Bulletin 88/21**

(84) Designated Contracting States:
**GB**

(56) References cited:
**EP-A-0 033 229**
**DE-A-2 754 340**
**DE-A-2 945 751**
**DE-C-1 054 101**
**FR-A- 829 083**
**FR-A-2 034 351**
**GB-A- 831 912**
**GB-A-2 019 552**
**US-A-4 163 430**
**US-A-4 171 089**
**US-A-4 193 180**

(73) Proprietor: **Kidd, Archibald Watson**
**Seend Close Seend**
**Melksham Wiltshire (GB)**

(72) Inventor: **Kidd, Archibald Watson**
**Seend Close Seend**
**Melksham Wiltshire (GB)**

(74) Representative: **Ford, Michael Frederick et al**
**MEWBURN ELLIS & CO. 2/3 Cursitor Street**
**London EC4A 1BQ (GB)**

Courier Press, Leamington Spa, England.

# Description

This invention is concerned with heat exchange apparatus, also known as an economiser, which in use is connected so as to receive hot flue gas from fuel-burning heating apparatus and transfer heat from the flue gas to a fluid medium so as to achieve an overall enhancement of thermal efficiency. Such an economiser is described in my European Patent Application 81.300296.1 published under No. 33229.

The combustion of a number of fuels leads to flue-gas containing one or more sulphur oxides which can lead to the presence of corrosive sulphur acids in flue systems. In particular, oil when burnt gives rise to a substantial quantity of water vapour as one of the products of combustion. This may condense in an economiser unit as mentioned above or in a flue. The sulphur oxides which derive from the sulphur content of the oil dissolve in the condensation. Consequently the condensation contains corrosive sulphur oxyacids.

It appears that in the past, the nature of this problem has not been fully appreciated. It appears that hitherto there has been no practical and effective way to avoid the corrosive effects of such acid condensation. For instance an ordinary paint treatment would be quite ineffective and would scarcely delay the onset of corrosion by any appreciable time. It may well be that this has prevented the development of the economiser units mentioned above. At the time this invention was made economiser units had not become generally available commercially even though there have been various proposals for such units. Moreover, at present it is not uncommon for flues to be lined by the insertion of flexible helically-wound stainless steel tubing despite the fact that stainless steel is not resistant to the corrosive condensation. In extreme cases such tubing is so eaten away after some years that what is left resembles a helical spring.

US—A—4163430 according to the preamble of claims 1 and 5, proposes an economiser unit (heat exchange apparatus) to be interposed between the exhaust from a hot water boiler and the chimney or flue. It is proposed that interior surfaces of the heat exchanger should be coated with "heat resistive, non-corrosive materials" in order to protect the surfaces from "possible corrosive effects of the exhaust gases".

In this prior proposal there is no suggestion that acid condensation may form within the apparatus. The specification only appears to contemplate protection from sulphur dioxide passing through the apparatus in the gas phase.

US—A—4171089 proposes an economiser in which a casing traversed by incoming air has tubes extending vertically through it. Exhaust gas is led through these tubes for the purpose of heat exchange. The teaching of this prior document is that the tubes should have a coating to protect them from acid condensation but there is no suggestion that this coating should extend beyond the interior of the tubes.

DE—A—2754340 discloses a heat exchange apparatus containing water filled vessels to absorb heat from flue gas. This document recognises the possibility of acid condensation. As a protective coating technique, there is mentioned vitreous enamelling of the parts from which the overall structure is subsequently assembled. One embodiment proposes that acid condensation should be chemically neutralised within the heat exchange apparatus.

GB—A—2019552 describes a heat exchanger unit in which epoxy resin is used to embed corrugated elements. The epoxy resin is primarily structural but does also provide an overall coating of the metal elements. There is however no suggestion that such coating should be extended beyond elements to whatever ducting is employed to supply the media undergoing heat exchange.

FR—A—2034351 proposes dip coating of part only of a structure used for refrigeration. The coating is applied to the interior of spaces which in use are filled with liquid and to such parts of their exteriors as are not important for heat exchange with gas.

According to one aspect of the present invention there is provided a heat exchange apparatus for transferring heat from flue gases to a fluid medium, the apparatus comprising a casing having an inlet thereto and an outlet therefrom for flue gas and heat exchange means within the casing defining one or more spaces for the passage of a fluid medium, the heat exchange means having surfaces exposed to the flue gas for the transfer of heat from the gas to said fluid medium, surfaces within the apparatus bearing a corrosion resistant coating on both the interior of said casing and said heat exchange means serving to protect them from the flue gas and condensation therefrom is an impermeable coating of acid resistant material applied by dip coating of said casing with said heat exchange means in place therein, whereby the coating is continuous over both the casing and the heat exchange means.

Preferably the coating consists of thermosetting synthetic resin. However, another possible coating material is vitreous enamel. It is preferred that synthetic resin is applied as a film forming composition, and cured by stoving.

Preferably the said surfaces are completely covered by the coating to a minimum coating thickness of 0.001 inch (25 microns). Preferably, the lower part of the casing has at least one drainage outlet for any moisture which may condense out within the casing, and is shaped so that such moisture will drain to the or a said drainage outlet.

It is very desirable that all of an article's surfaces which will be exposed to flue gas cooled below the dewpoint (so that condensation can form) have complete coverage by the coating, without breaks, pin-holes or thin patches. It is also desirable to arrange that surfaces onto which condensation will run are similarly coated, and conversely to arrange that condensation does not run onto surfaces not protected by the coating. Preferably then the drainage of condensation is guided away from any uncoated surfaces.

It may be arranged that all surfaces liable to be exposed to acid condensation have their operating temperature limited by the fluid medium. This can enable such surfaces to be satisfactorily protected by means of a coating material unable to withstand the temperature at which the hot flue gas leaves the fuel-burning heating apparatus while condensation is prevented from running from the cooler parts of the economiser onto surfaces which are heated by the flue gas to a greater temperature than the coating material could withstand.

The heat exchange apparatus can be made of mild steel rather than stainless steel, relying on the coating to protect the metal from corrosion. At some stage prior to coating, the mild steel is preferably degreased, given an acid pickle to remove any rust and/or mill scale and provide a sound surface to coat, and then phosphated. This phosphating gives a good key for a coating layer.

In a second aspect this invention provides a method of protecting a heat exchange apparatus for transferring heat from flue gases to a fluid medium, the apparatus comprising a casing having an inlet thereto and an outlet therefrom for flue gas and heat exchange means within the casing defining one or more spaces for the passage of a fluid medium, the heat exchange means having surfaces exposed to the flue gas for the transfer of heat from the gas to said fluid medium, and surfaces within the apparatus bearing a corrosion resistant coating, characterised in that the corrosion resistant coating is provided by applying an impermeable coating of an acid resistant material to both the interior of the said casing and to said heat exchange means, application of said coating being effected by dip coating of said casing with said exchange means in place therein, and thereafter curing said coating by stoving, whereby the coating is continuous over both the casing and the heat exchange means.

This technique is suitable for coating a fully assembled economiser, and therefore allows it to be made by welding its parts together, which is an economical form of construction.

An important development of this invention is to turn the dip-coated article while the paint coating dries, before stoving it. This has been found to prevent localised thinning of the cooling fluid coating, such as when the fluid coating runs off edges and corners as the solvent evaporates (so called "solvent wash"). It is rather like keeping treacle or honey on a spoon by twisting the spoon. Conveniently the article is rotated around two perpendicular axes (but of course rotations about any two non-parallel axes will have components about perpendicular axes). Swinging to and fro through an arc could possibly be employed in place of rotation through a full circle, although the latter is simpler to arrange.

A preferred synthetic resin for dip-coating is phenolic epoxy resin, formulated as a heat-curable paint. The paint can be a stoving modified epoxy paint containing pigment, paint extenders (finely ground powders such as barytes and talc), liquid synthetic resins such as epoxy alkyd and melamineformaldehyde, hydrocarbon and other solvent liquids.

A supplier of such paints is Pinchin Johnson Paints, Packaging and Coil Coating Division, London, England. An epoxy phenolic enamel paint designated by them as PJ 2088 has been found suitable. Prior to this invention it had been used for lining steel drums, in which application it was not of course required to withstand heat.

The finished, baked coating of synthetic resin may be between 0.001 and 0.003 ins (25—75 microns) thick.

An embodiment of this invention will now be described with reference to the accompanying drawings, in which:

Fig. 1 is a vertical cross section of an economiser unit, provided with a coating in accordance with this invention;

Fig. 2 is a side view, partly cut away, of a rotary oven used in applying the coating to the economiser; and

Fig. 3 is an end view of the oven, looking in the direction of the arrow III in Fig. 2, and with an end of the heated box removed and one hoop cut away.

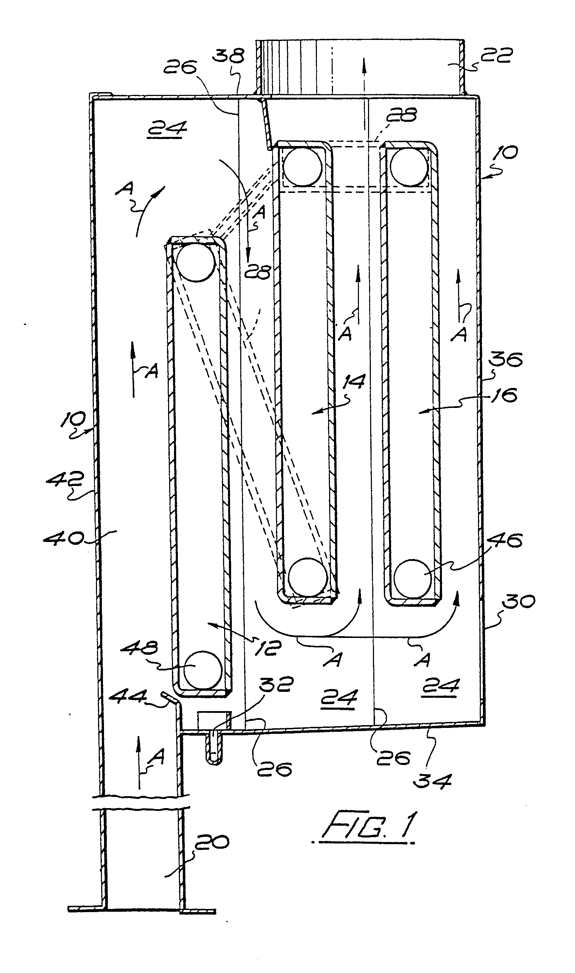

The economiser unit shown in Fig. 1 is the interior part of a thermally insulated unit described in detail in my European application 81.300296.1, published under number 33229 as mentioned above. The disclosure of that application is incorporated herein by reference. When completed, the economiser unit shown in Fig. 1 is clad with thermal insulation surrounded by an outer casing. It is then suitable to be mounted above a water heating boiler to extract extra heat from the flue gas leaving that boiler. The boiler may be as described in my earlier European application 80.302818.2 published under number 0024376 (whose disclosure is also incorporated herein by reference.)

Briefly, the unit shown in Fig. 1 comprises a casing 10 containing three heat exchange vessels 12, 14, 16 extending across its width. In use flue gas enters up an inlet duct 20, flows around the path denoted by the arrows A, and then out through an outlet duct 22.

The unit is of all welded construction. Each of the vessels 12, 14, 16 consists of two steel plates bent to an L-shaped cross section and welded together to form a box. The ends of these boxes are welded to plates 24 which are then welded together along the seams 26 to form the sides of the casing 10. The vessels 12, 14, 16 are connected by ducts 28 on the outside of the casing and in use are filled with water. There is a cleaning aperture 30 in the front face of the casing and a condensation drain at 32.

After fabrication the entire unit is given a protective coating as will be described below. In use of the economiser, the heat exchange vessels 12, 14, 16 and also the parts of the casing 34, 36, 38 beneath, in front of, and above these vessels all have their operating temperature limited by the water which flows through the heat exchange vessels. The incoming flue gas remains above the dew point until it is at least part way up the space 40 between the vessel 12 and the back 42 of the casing. A baffle 44 at the base of the rear face of the heat exchange vessel 12 prevents condensation which runs down the back face of this vessel 12 from passing down into the inlet 20. This is desirable because although the inlet duct 20 would be coated in the same manner as the rest of the unit shown, the temperature in this inlet duct 20 might possibly rise to a greater temperature than the coating material can withstand.

After the various parts of the unit have been welded together to the form shown in Fig. 1, it is degreased and subjected to an acid pickle (immersion in a 10% solution of concentrated hydrochloric acid) to remove any incipient rust or mill scale. It is then washed, and phosphated in conventional manner. After this it is washed again, dried and straightaway coated with a thermosetting resin paint. Description will be given with reference to an example found satisfactory, the Pinchin Johnson epoxy phenolic enamel paint, designation PJ 2088.

As supplied the paint contained 40—44% solids by weight. For application it was diluted by adding about 4 to 5 litres of Pinchin Johnson thinner number 0000 5 1059 to 100 litres of paint. The thinner comprises ethyl cellosolve (2-epoxy ethan-1-ol) blended with low boiling naphtha. This dilution gave a cream like consistency a little more viscous than domestic gloss paint.

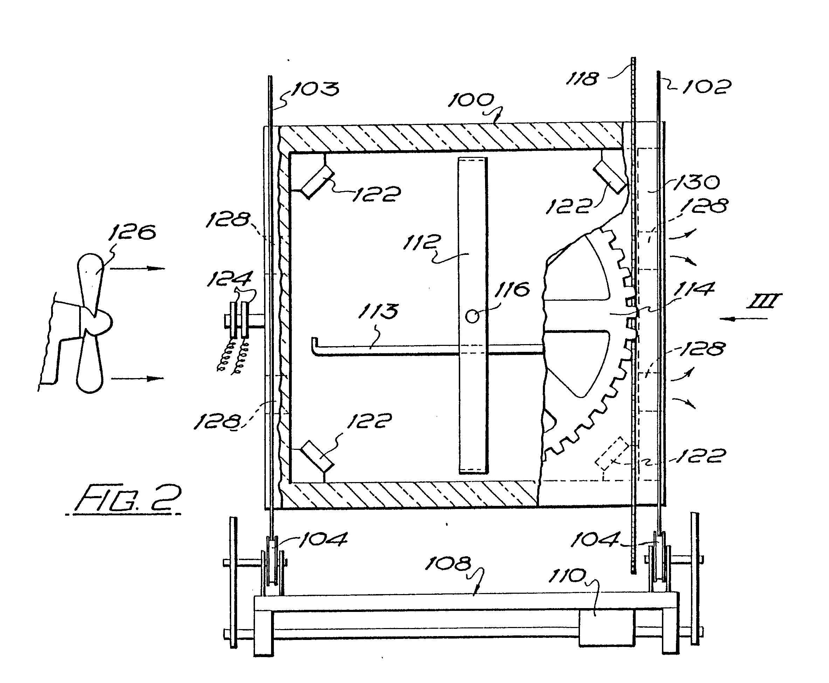

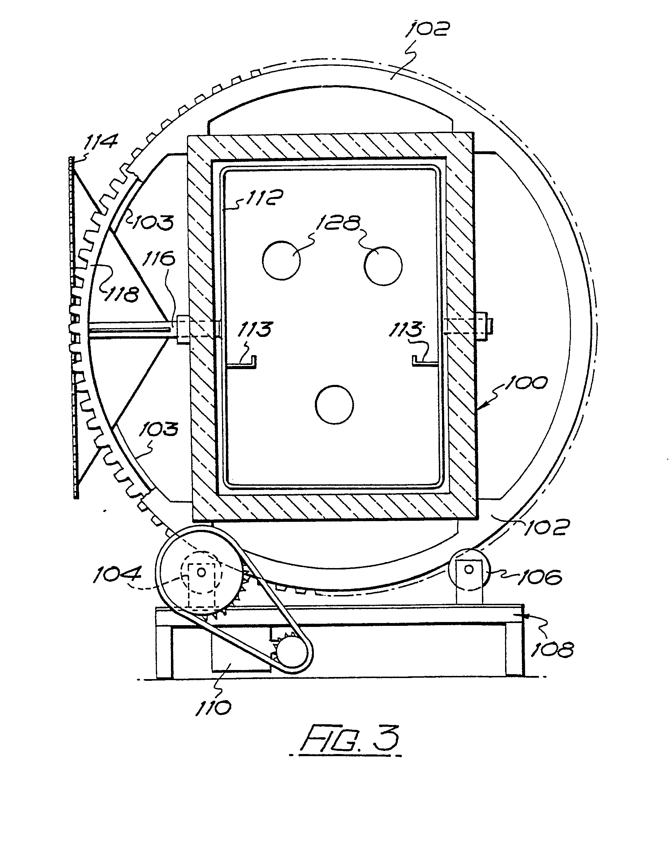

The inlet 46 and outlet 48 of the system of water filled spaces are temporarily blocked off with suitable plugs. Then the unit — fully assembled as shown in Fig. 1 — is submerged in a suitably shaped tank filled with this paint, so that all interior, and exterior, surfaces of the casing 10 and the exterior surfaces of the heat exchanger vessels 12, 14, 16 are coated by the paint. The unit is lifted out of the tank and surplus paint allowed to drain back into the tank at room temperature for 15 to 30 minutes. After it has drained the unit is transferred to the apparatus shown in Figs. 2 and 3 to dry and then stove the paint.

The rotary oven shown in Figs. 2 and 3 comprises a cuboidal insulated box 100 mounted within a pair of steel hoops 102, 103. These run on flanged rollers 104, 106 carried on a base frame 108. The two rollers 104 are driven, for example from an electric motor 110 beneath the frame 108 and provided with reduction gearing so that the box 100 rotates at a slow speed such as 1—3 r.p.m.

A yoke 112 is journalled in the sides of the box 100, to rotate within the box. The yoke 112 carries slides 113 to receive a unit as shown by Fig. 1. Clips, latches or other means, not shown are provided for attaching the unit to the slides.

The yoke 112 is driven by a gear wheel 114 secured by gussets to a shift 116 fast with the yoke. This wheel 114 engages a fixed gear ring 118 which encircles the box 100, with a little clearance. It is supported in position by an angle iron frame (not shown) which is fast with the base frame 108 and is arranged so as not to interfere with movement of the gear 114.

Thus as the driven rollers 104 rotate the box 100 about a horizontal axis, the wheel 114 engaging the fixed ring 118 turns the yoke 112 in the box about an axis perpendicular to that of the box, and it is of course turning about the axis of the box at the same time.

Four electrical heating elements 122 extend along corners of the box. Power for these is led in through slip rings 124. A fan 126 is provided to blow air through the holes 128 in the ends of the box. The end 130 of the box is removable.

After an economiser unit as shown in Fig. 1 has been dip coated with paint and allowed to drain, it is loaded into the box 100 which is then rotated while heat is supplied from the elements 122. Air is blown through the box to entrain solvent evaporating from the paint. In this way the paint on the unit is dried while the unit is rotating about two axes and so the evaporating solvent does not wash paint away from edges and corners.

The time and temperature to effect drying can be found by experiment. Drying should obviously not be so fast that the evaporating solvent causes blow holes in the paint. A suitable temperature for drying the paint is about 200°F (about 90°C).

When the paint is dry the temperature in the oven is raised to a suitable level for stoving the paint, by supplying more power to the heaters 122 and perhaps turning off the fan 126. For the paint specified stoving can be effected by a temperature of 403°F (206°C) for 7 minutes. Rotation can be continued during stoving, but is not essential.

The paint film applied by the dip-coating process described above is much thicker than normal spray paint coatings. It has been found to give an eventual baked coat about 0.002 inch (50 microns) thick. The thickness obtained depends on the viscosity of the paint into which the economiser unit is dipped. Only a single coat would normally be applied but if appropriate to meet extremely difficult conditions a further coat could be applied. This would be put on after the first coat had been baked and the article allowed to cool back to room temperature. It would be applied by dip coating as above, and dried in the oven as before followed by stoving at the same stoving temperature but for 15 minutes.

The coating of thermosetting resin obtained in the manner described is an impermeable coating of an acid resistant material. It is sufficiently hard to permit the vessels 12, 14, 16 and the interior of the casing 10 to be cleaned by brushing.

## Claims

1. A heat exchange apparatus for transferring heat from flue gases to a fluid medium, the apparatus comprising a casing (10) having an inlet (20) thereto and an outlet (22) therefrom for flue gas and heat exchange means (12, 14, 16) within the casing defining one or more spaces for the passage of a fluid medium, the heat exchange means having surfaces exposed to the flue gas for the transfer of heat from the gas to said fluid medium, surfaces within the apparatus bearing a corrosion resistant coating, characterised in that a corrosion resistant coating on both the interior of said casing (10) and said heat exchange means (12, 14, 16) serving to protect them from the flue gas and condensation therefrom is an impermeable coating of acid resistant material applied by dip coating of said casing with said heat exchange means in place therein, whereby the coating is continuous over both the casing and the heat exchange means.

2. An article according to claim 1 wherein the coating comprises thermosetting synthetic resin.

3. An article according to claim 1 wherein the coating comprises vitreous enamel.

4. An article according to claim 1, claim 2 or claim 3 wherein the lower part of said casing has at least one drainage outlet (32) for any moisture which may condense out within the casing, and is shaped so that such moisture will drain to the or a said drainage outlet.

5. A method of protecting a heat exchange apparatus for transferring heat from flue gases to a fluid medium, the apparatus comprising a casing (10) having an inlet (20) thereto and an outlet (22) therefrom for flue gas and heat exchange means (12, 14, 16) within the casing defining one or more spaces for the passage of a fluid medium, the heat exchange means having surfaces exposed to the flue gas for the transfer of heat from the gas to said fluid medium, and surfaces within the apparatus bearing a corrosion resistant coating, characterised in that the corrosion resistant coating is provided by applying an impermeable coating of an acid resistant material to both the interior of the said casing (10) and to said heat exchange means (12, 14, 16), application of said coating being effected by dip coating of said casing with said exchange means in place therein, and thereafter curing said coating by stoving, whereby the coating is continuous over both the casing and the heat exchange means.

6. A method according to claim 5, wherein the coating is a thermosetting synthetic resin paint.

7. A method according to claim 6 wherein the dip coated apparatus is turned while the paint film dries, prior to said stoving of said apparatus.

## Patentansprüche

1. Wärmetauscher zum Übertragen von Wärme von Abgasen an ein flüssiges Medium, bestehend aus einem Gehäuse (19) mit einem Einlaß (20) und einem Auslaß (22) für die Abgase und einer Wärmeaustauscheinrichtung (12, 14, 16) innerhalb des Gehäuses, die einen oder mehrere Hohlräume für den Durchtritt eines flüssigen Mediums begrenzt, wobei die Wärmeaustauscheinrichtung Oberflächen hat, die den Abgasen ausgesetzt sind, um Wärme von dem Gas auf das flüssige Medium zu übertragen, wobei die Oberflächen innerhalb des Wärmetauschers eine korrosionsbeständige Schicht tragen, dadurch gekennzeichnet, daß eine korrosionsbeständige Schicht sowohl auf der Innenseite des Gehäuses (10) als auch auf der Wärmeaustauscheinrichtung (12, 14, 16), die dazu dient, diese vor den Abgasen und deren Kondensation zu schützen, eine undurchlässige Schicht aus einem säurefesten Material ist, die durch eine Tauchbeschichtung des Gehäuses mit der daran angeordneten Wärmeaustauscheinrichtung aufgebracht wird, wodurch die Beschichtung sowohl auf dem Gehäuse als auch auf der Wärmeaustauscheinrichtung durchgehend ist.

2. Wärmetauscher nach Anspruch 1, wobei die Beschichtung ein warmhärtendes Kunstharz ist.

3. Wärmetauscher nach Anspruch 1, wobei die Beschichtung glasähnliches Email ist.

4. Wärmetauscher nach Anspruch 1, 2 oder 3, wobei der untere Teil des Gehäuses mindestens eine Ausflüßöffnung (32) für eine in dem Gehäuse möglicherweise kondensierende Feuchtigkeit aufweist, wobei dieser untere Teil so geformt ist, daß diese Feuchtigkeit zu dieser oder zu diesen Abflußöffnungen abläuft.

5. Verfahren zum Schutz eines Wärmetauschers zur Übertragung von Wärme von Abgasen zu einem flüsigen Medium, der ein Gehäuse (10) mit einem Einlaß (20) und einem Auslaß (22) für Abgase und eine Wärmeaustauscheinrichtung (12, 14, 16) innerhalb des Gehäuses aufweist, die eine oder mehrere Kammern für den Durchtritt eines flüssigen Mediums begrenzt, wobei die Wärmeaustauscheinrichtung Oberflächen aufweist, die den Abgasen zur Übertragung von Wärme von den Gasen an das flüssige Medium ausgesetzt sind, und Oberflächen innerhalb des Wärmetauschers eine korrosionsbeständige Beschichtung tragen, dadurch gekennzeichnet, daß die korrosionsbeständige Beschichtung geschaffen wird durch Aufbringen einer undurchlässigen Beschichtung eines säurefesten Materials sowohl auf das Innere des Gehäuses (10) als auch auf die Wärmeaustauscheinrichtung (12, 14, 16), wobei das Aufbringen dieser Beschichtung durch eine Tauchbeschichtung des Gehäuses, in dem die Wärmeaustauscheinrichtung angeordnet ist, bewirkt wird, woraufhin die Beschichtung durch Einbrennen gehärtet wird, wodurch die Beschichtung sowohl auf dem Gehäuse als auch auf der Wärmeaustauscheinrichtung durchgehend ist.

6. Verfahren nach Anspruch 5, wobei die Beschichtung eine wärmehärtende Kunstharzfarbe ist.

7. Verfahren nach Anspruch 6, wobei der tauchbeschichtete Wärmetauscher vor dem Einbrennen gedreht wird, während die Farbschicht trocknet.

## Revendications

1. Appareil échangeur de chaleur pour le transfert de chaleur de gaz usés à un milieu fluide, appareil comprenant une enveloppe (10) ayant une entrée (20) et une sortie (22) pour le gaz usé et des moyens échangeurs de chaleurs (12, 14, 16) à l'intérieur de l'enveloppe définissant un ou plusieurs espaces pour le passage d'un milieu fluide, les moyens échangeurs de chaleur ayant des surfaces exposées au gaz usé pour le transfert de chaleur du gaz audit milieu fluide, des surfaces à l'intérieur de l'appareil portant un revêtement résistant à la corrosion, caractérisé en ce que le revêtement résistant à la corrosion à la fois sur l'intérieur de ladite enveloppe (10) et sur lesdits moyens échangeurs de chaleur (12, 14, 16) servant à les protéger du gaz usé et de la condensation qui provient, est un revêtement imperméable d'une matière résistant aux acides appliquées par revêtement par immersion de ladite enveloppe et desdits moyens échangeurs de chaleur positionnés dans l'enveloppe, le revêtement étant continu à la fois sur l'enveloppe et sur les moyens échangeurs de chaleur.

2. Appareil selon la revendication 1, dans lequel le revêtement comprend une résine synthétique thermodurcissable.

3. Appareil selon la revendication 1, dans lequel le revêtement comprend un émail vitrifié.

4. Appareil selon la revendication 1, la revendication 2 ou la revendication 3, dans lequel la partie inférieure de ladite enveloppe présente au moins une sortie d'écoulement (32) pour toute humidité qui peut se condenser à l'intérieur de l'enveloppe, et présente une forme telle que cette humidité s'écoule vers ladite ou vers l'une desdites sorties d'écoulement.

5. Procédé de protection d'un appareil échangeur de chaleur pour le transfert de chaleur de gaz usés à un milieu fluide, l'appareil comprenant une enveloppe (10) comportant une entrée (20) et une sortie (22) pour le gaz usé et des moyens échangeurs de chaleur (12, 14, 16) à l'intérieur de l'enveloppe définissant un ou plusieurs espaces pour le passage d'un milieu fluide, les moyens échangeurs de chaleur ayant des surfaces exposées au gaz usé pour le transfert de chaleur du gaz audit milieu fluide, et des surfaces à l'intérieur de l'appareil portant un revêtement résistant à la corrosion, caractérisé en ce que le revêtement résistant à la corrosion est obtenu par application d'un revêtement imperméable d'une matière résistant aux acides à la fois à intérieur de ladite enveloppe (10) et auxdits moyens échangeurs de chaleur (12, 14, 16), l'application dudit revêtement étant effectuée par un revêtement par immersion de ladite enveloppe et desdits moyens échangeurs positionnés dans l'enveloppe, puis par durcissement dudit revêtement par cuisson, le revêtement étant continu à la fois sur l'enveloppe et sur les moyens échangeurs de chaleur.

6. Procédé selon la revendication 5, dans lequel le revêtement est une peinture de résine synthétique thermodurcissable.

7. Procédé selon la revendication 6, dans lequel on fait tourner l'appareil ayant subi le revêtement par immersion tandis que la pellicule de peinture sèche, avant ladite cuisson dudit appareil.

0 057 095

*FIG.1*

FIG. 2

FIG. 3